(19) Europäisches Patentamt
European Patent Office
Office européen des brevets

(11) **EP 2 801 158 B1**

(12) **FASCICULE DE BREVET EUROPEEN**

(45) Date de publication et mention
de la délivrance du brevet:
**18.05.2016 Bulletin 2016/20**

(21) Numéro de dépôt: **12810392.6**

(22) Date de dépôt: **17.12.2012**

(51) Int Cl.:
*H04B 7/06* (2006.01)     *H04B 7/08* (2006.01)
*H04L 5/14* (2006.01)

(86) Numéro de dépôt international:
**PCT/FR2012/052956**

(87) Numéro de publication internationale:
**WO 2013/102717 (11.07.2013 Gazette 2013/28)**

(54) **PROCEDE DE PRE-CODAGE EN TDD**

VERFAHREN ZUR TDD-VORCODIERUNG

METHOD OF TDD PRE-CODING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.01.2012 FR 1250047**

(43) Date de publication de la demande:
**12.11.2014 Bulletin 2014/46**

(73) Titulaire: **Orange**
**75015 Paris (FR)**

(72) Inventeur: **PHAN HUY, Dinh Thuy**
**F-75004 Paris (FR)**

(56) Documents cités:
**EP-A2- 2 375 583     WO-A2-2008/021396
FR-A1- 2 925 798**

• **YUANWEI JIN ET AL: "Multiple Antenna Time
Reversal Transmission in Ultra-Wideband
Communications", GLOBAL
TELECOMMUNICATIONS CONFERENCE, 2007.
GLOBECOM '07. IEEE, IEEE, PISCATAWAY, NJ,
USA, 1 novembre 2007 (2007-11-01), pages
3029-3033, XP031196502, DOI:
10.1109/GLOCOM.2007.926 ISBN:
978-1-4244-1042-2**

EP 2 801 158 B1

**Description**

L'invention se rapporte au domaine des radiocommunications mettant en oeuvre un duplexage par répartition dans le temps TDD (« *Time Division Duplex »).* Plus précisément, l'invention concerne les techniques de pré-codage appliquées à un système de transmission de données comprenant un émetteur équipé d'une ou plusieurs antenne(s) d'émission, et un récepteur équipé d'au moins deux antennes de réception (système dit SIMO (initiales des mots anglais « *Single Input Multiple Output* ») lorsque le système ne comprend qu'une seule antenne d'émission, et MIMO (initiales des mots anglais « *Multiple Input Multiple Output »)* lorsque le système comprend plusieurs antennes d'émission).

On rappelle qu'un tel pré-codage a pour but, d'une part, de focaliser sur les antennes réceptrices les signaux émis par la ou les antenne(s) d'émission, et d'autre part de maximiser le débit de données entre l'émetteur et le récepteur, pour une puissance donnée de l'émetteur.

La présente invention concerne, *stricto sensu,* un système à monoporteuse de transmission de données à travers un canal « plat » dans l'espace des fréquences (« *flat fading* » en anglais), c'est-à-dire sans échos. En effet, dans ce cas particulier, le canal de propagation entre une antenne d'émission quelconque et une antenne de réception quelconque peut être représenté simplement par un gain complexe, qui est mesurable. Par conséquent, le canal de propagation entre un réseau de plusieurs antennes d'émission et un réseau de plusieurs antennes de réception peut être représenté par une matrice complexe mesurable, dont chaque ligne correspond à une antenne de réception et chaque colonne à une antenne d'émission.

Cela étant, l'invention peut avantageusement être appliquée à chacune des sous-porteuses d'un système multi-porteuses, tel qu'une modulation selon un multiplexage de fréquences orthogonales OFDM (initiales des mots anglais « *Orthogonal Frequency Division Multiplexing* »), qui permet de se ramener à $S$ systèmes à monoporteuse indépendants (où $S$ est le nombre de sous-porteuses), transmettant chacun à travers un canal de propagation plat dans l'espace des fréquences, et pouvant chacun mettre en oeuvre la présente invention.

A cet égard, on rappelle que le signal radio transmis par une antenne d'émission subit des déformations en fonction des conditions de propagation entre cette antenne d'émission et une antenne de réception. Afin de limiter ces déformations, le signal est préalablement distordu par application de coefficients dits de « pré-égalisation », en fonction des caractéristiques du canal de propagation entre ces deux antennes. Il est donc nécessaire, pour ce faire, de déterminer les caractéristiques de ce canal de propagation dans la bande de fréquences concernée.

Parmi les méthodes de pré-égalisation existantes, se distinguent les méthodes mettant en oeuvre la technique dite du « Retournement Temporel », du fait de sa complexité réduite, de ses performances et de sa capacité intrinsèque à focaliser une onde radio sur une antenne de réception. Le Retournement Temporel permet de réduire significativement la dispersion causée par le canal de propagation en focalisant l'énergie du signal transmis dans le temps et dans l'espace.

Le Retournement Temporel est une technique (à l'origine utilisée dans le domaine des ondes acoustiques) qui repose sur l'invariance par renversement du temps de l'équation d'onde. Ainsi, une onde temporellement inversée se propage comme une onde directe qui remonterait le temps. Lorsqu'une impulsion brève émise par un point d'origine se propage dans un milieu de propagation, et qu'une partie de cette onde reçue par un point destinataire est retournée temporellement avant d'être renvoyée dans le milieu de propagation, l'onde converge vers le point d'origine en y reformant une impulsion brève. Le signal recueilli au point d'origine est quasi-identique dans sa forme au signal d'origine émis par le point d'origine.

La technique du Retournement Temporel a été appliquée aux réseaux de communication radio pour annuler l'effet du canal de propagation sur le signal reçu par une antenne réceptrice, notamment en réduisant l'étalement du canal par concentration de l'énergie en un point focal où se trouve cette antenne réceptrice et en réduisant l'étalement temporel (« *delay spread* » en anglais) du signal reçu, ainsi que pour simplifier le traitement de symboles reçus après la traversée du canal. Pour ce faire, le signal émis par une antenne émettrice est pré-égalisé par application de coefficients obtenus à partir du retournement temporel de la réponse impulsionnelle du canal de propagation que ce signal doit traverser.

Dans le cas des transmissions en TDD, la réciprocité du canal permet à l'émetteur d'effectuer une estimation du canal à l'aide de signaux pilotes. Le récepteur émet des signaux pilotes, l'émetteur estime le canal de propagation, et l'émetteur utilise cette estimation pour effectuer une pré-égalisation du signal de données avant de le transmettre.

Dans le cadre de la présente invention, on suppose que la question de l'étalement temporel du canal a été traitée d'une manière ou d'une autre, de sorte que le canal effectif obtenu après estimation et pré-égalisation peut être considéré comme non-étalé temporellement (*flat fading*). C'est le cas par exemple lorsque l'on applique le procédé de pré-codage selon l'invention à l'une des sous-porteuses d'une modulation OFDM. En conséquence, la qualité d'une technique de pré-codage telle que concernée ici est non pas sa faculté à compenser les échos (focalisation *temporelle*), mais sa capacité à focaliser plusieurs flux de données distincts sur des antennes de réceptions distinctes (focalisation *spatiale*).

Concernant donc le pré-codage tel que défini ci-dessus, il a été proposé un procédé de pré-codage, dit du « Retournement Temporel Itératif » (RTI), qui est fondé sur des itérations multiples de la technique du Retournement Temporel (cf. l'article de W.J. Higley, P. Roux, et W.A. Kuperman intitulé « Relationship between time reversal and linear equalization in digital communications », J. Acoust. Soc. Am., 120 (1), pages 35 à 37, juillet 2006). On peut montrer que l'on obtient par cette méthode un pré-codeur optimal à condition de mettre en oeuvre un certain nombre optimal d'itérations du Retournement Temporel. Malheureusement, l'on ne connaît pas de méthode (autre que par tâtonnements) pour déterminer ledit nombre d'itérations optimal, de sorte que le pré-codage RTI n'est pas utilisé en pratique.

La présente invention concerne donc un procédé de pré-codage pour un système de transmission de données en TDD comprenant un émetteur équipé de $N$ antenne(s) d'émission, où $N \geq 1$, et un récepteur équipé de $M$ antennes de réception, où $M \geq 2$. Ledit procédé est remarquable en ce que l'on définit une série de pré-codeurs $L_n$, où $n$ est un nombre entier positif ou nul, et $L_n$ est le pré-codeur obtenu en appliquant $(N_0 + nq)$, où $N_0$ et $q$ sont des entiers prédéterminés tels que $N_0 \geq 0$ et $q > 0$, itérations d'un pré-codeur à Retournement Temporel Itératif pour la matrice $\hat{H} \in \mathbf{C}^{M \times N}$, qui est une estimation de la matrice de canal $H \in \mathbf{C}^{M \times N}$, et en ce que, ledit procédé étant itératif, chaque itération du procédé comprend les étapes suivantes :

- ledit émetteur prend en compte une valeur $n = n_0$ prédéterminée s'il s'agit de la première itération du procédé, ou sinon une valeur de $n$ obtenue lors de l'itération précédente du procédé,
- l'émetteur envoie au récepteur un triplet de signaux pilotes pré-codés avec les pré-codeurs $L_n$, $L_{n+1}$, et $L_{n+2}$,
- en fonction dudit triplet de signaux pilotes reçu, le récepteur estime le triplet $(T_n, T_{n+1}, T_{n+2})$ de débits totaux atteignables correspondant respectivement à $(L_n, L_{n+1}, L_{n+2})$, et en déduit une commande de contrôle p, dont la valeur est déterminée comme suit :

  • $p = +1$ si $T_{n+2} = \max(T_n, T_{n+1}, T_{n+2})$,
  • $p = -1$ si $T_n = \max(T_n, T_{n+1}, T_{n+2})$, et
  • $p = 0$ si $T_{n+1} = \max(T_n, T_{n+1}, T_{n+2})$,

- le récepteur envoie un message de signalisation à l'émetteur indiquant ladite valeur de la commande de contrôle $p$, et
- sur réception dudit message de signalisation, l'émetteur met à jour la valeur de $n$ en la remplaçant par la valeur de $(n + p)$.

Ainsi, les itérations successives du procédé selon l'invention font converger automatiquement le système de transmission vers un pré-codeur $L_{n+1}$ tel que le débit total (i.e. sommé sur toutes les antennes de réception) $T_{n+1}$ associé aux signaux pilotes pré-codés avec ce pré-codeur $L_{n+1}$ soit le débit maximum possible, compte tenu du rapport signal-sur-bruit du canal pilote.

Grâce à ces dispositions, on détermine de manière dynamique un pré-codeur RTI optimal. De plus, avantageusement, la mise en oeuvre de l'invention ne requiert que des calculs relativement légers.

Par ailleurs, on rappelle qu'en théorie le pré-codeur optimal pour un système dont la contrainte est de transmettre un flux par antenne de réception est le pré-codeur MMSE (initiales des mots anglais « Minimum Mean-Square Error » signifiant « Erreur Quadratique Moyenne Minimale »), tel qu'étudié par exemple dans l'article de A.D. Dabbagh et D.J. Love intitulé « Multiple antenna MMSE-based downlink precoding with quantized feedback or channel mismatch » (IEEE Transactions on Communications, vol. 56, n° 11, pages 1859 à 1868, novembre 2008). Toutefois, l'efficacité de ce pré-codeur MMSE repose sur une estimation et une prédiction précises du rapport signal-sur-bruit (« Signal over Noise Ratio », ou SNR, en anglais), c'est-à-dire le rapport entre la puissance reçue (sans pré-codage) par le récepteur moyennée sur les antennes de réception, et le bruit du récepteur ; or cette estimation est difficile à réaliser, de sorte qu'en pratique une mauvaise estimation du SNR (appelée « SNR mismatch » dans la littérature en anglais) empêche d'obtenir les performances attendues. Par ailleurs, cette technique MMSE requiert des opérations de type matriciel, qui sont, comme il est bien connu, des opérations exigeantes en termes de calcul.

Avantageusement, la présente invention permet de déterminer un pré-codeur optimal sans nécessiter une estimation précise du rapport signal-sur-bruit, et sans effectuer d'inversion matricielle.

Selon des caractéristiques particulières, lorsque l'émetteur a des données à transmettre, il utilise pour cette transmission un pré-codeur de données $G$ obtenu en appliquant au pré-codeur de pilotes $L_{n+1}$ courant un décalage $\delta$ d'itérations du Retournement Temporel Itératif, ledit décalage $\delta$ étant fonction d'un différentiel de puissance $\theta$ dB défini comme suit :

$$\theta = 10 \log_{10}\left(\frac{P_{data}}{P_{pilotes}}\right),$$

où $P_{data}$ et $P_{pilotes}$ sont les puissances de transmission du canal de données et du canal pilote respectivement.

Grâce à ces dispositions, on peut aisément déterminer, à tout moment où l'on souhaite transmettre des données, un pré-codeur de données $G$ optimal, sur la base du pré-codeur de pilotes $L_{n+1}$ courant.

Selon des caractéristiques encore plus particulières, ledit décalage $\delta$ est calculé comme suit :

$$\delta = \mathbf{E}[\theta/f],$$

où $\mathbf{E}$ désigne la partie entière, et $f$ est un accroissement de SNR en dB prédéterminé associé à l'application d'une unique itération du Retournement Temporel Itératif.

Grâce à ces dispositions, on peut très aisément calculer ce décalage $\delta$.

Corrélativement, l'invention concerne divers dispositifs.

Elle concerne ainsi, premièrement, un émetteur dans un système de transmission de données en TDD, ledit émetteur étant équipé de $N$ antenne(s) d'émission, où $N \geq 1$. Ledit émetteur est remarquable en ce qu'il comprend des moyens pour stocker ou engendrer une série de pré-codeurs $L_n$, où $n$ est un nombre entier positif ou nul, et $L_n$ est le pré-codeur obtenu en appliquant $(N_0 + nq)$, où $N_0$ et $q$ sont des entiers prédéterminés tels que $N_0 \geq 0$ et $q > 0$, itérations d'un pré-codeur à Retournement Temporel Itératif pour la matrice $\hat{H} \in \mathbf{C}^{M \times N}$, qui est une estimation de la matrice de canal $H \in \mathbf{C}^{M \times N}$, où $M \geq 2$ désigne le nombre d'antennes de réception d'un récepteur quelconque, et en ce qu'il comprend des moyens pour :

- enregistrer une valeur de $n$,
- envoyer audit récepteur un triplet de signaux pilotes pré-codés avec les pré-codeurs $L_n$, $L_{n+1}$, et $L_{n+2}$,
- recevoir de la part du récepteur un message de signalisation indiquant une valeur de commande de contrôle $p$, et
- sur réception dudit message de signalisation, mettre à jour la valeur de $n$ en la remplaçant par la valeur de $(n + p)$.

Selon des caractéristiques particulières, ledit émetteur comprend en outre des moyens pour mettre en oeuvre un pré-codeur de données $G$ obtenu en appliquant au pré-codeur de pilotes $L_{n+1}$ courant un décalage $\delta$ d'itérations du Retournement Temporel Itératif, ledit décalage $\delta$ étant fonction d'un différentiel de puissance $\theta$ dB défini comme suit :

$$\theta = 10 \, \log_{10}\left(\frac{P_{data}}{P_{pilotes}}\right),$$

où $P_{data}$ et $P_{pilotes}$ sont les puissances de transmission du canal de données et du canal pilote respectivement.

Selon des caractéristiques encore plus particulières, ledit décalage $\delta$ est calculé comme suit :

$$\delta = \mathbf{E}[\theta/f],$$

où $\mathbf{E}$ désigne la partie entière, et $f$ est un accroissement de rapport signal-sur-bruit en dB prédéterminé associé à l'application d'une unique itération du Retournement Temporel Itératif.

L'invention concerne aussi, deuxièmement, un récepteur, dans un système de transmission de données en TDD, ledit récepteur étant équipé de $M$ antennes de réception, où $M \geq 2$. Ledit récepteur est remarquable en ce qu'il comprend des moyens pour :

- recevoir de la part d'un émetteur un triplet de signaux pilotes pré-codés avec des pré-codeurs $L_n$, $L_{n+1}$, et $L_{n+2}$,
- en fonction dudit triplet de signaux pilotes reçu, estimer le triplet $(T_n, T_{n+1}, T_{n+2})$ de débits totaux atteignables correspondant respectivement à $(L_n, L_{n+1}, L_{n+2})$, et en déduire une commande de contrôle $p$, dont la valeur est déterminée comme suit :

  • $p = +1$ si $T_{n+2} = \max(T_n, T_{n+1}, T_{n+2})$,
  • $p = -1$ si $T_n = \max(T_n, T_{n+1}, T_{n+2})$, et
  • $p = 0$ si $T_{n+1} = \max(T_n, T_{n+1}, T_{n+2})$, et

- envoyer audit émetteur un message de signalisation indiquant ladite valeur de la commande de contrôle $p$.

Selon des caractéristiques particulières, on pourra réaliser l'un quelconque des dispositifs succinctement exposés ci-dessus dans le contexte d'un circuit électronique.

Les avantages offerts par ces dispositifs sont essentiellement les mêmes que ceux offerts par les procédés corrélatifs succinctement exposés ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés de pré-codage succinctement exposés ci-dessus, lorsqu'il est exécuté sur un ordinateur.

Les avantages offerts par ces dispositifs et ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux dessins qui l'accompagnent, dans lesquels :

- la figure 1a est un graphique représentant le débit de données en fonction du SNR pour une série de pré-codeurs, lors d'une itération d'un mode de réalisation du procédé selon l'invention dans laquelle la commande de contrôle reçue du récepteur vaut (+1),
- la figure 1b est un graphique représentant l'itération faisant suite à l'itération représentée sur la figure 1a, et dans laquelle la commande de contrôle reçue du récepteur vaut (0),
- la figure 2a est un graphique représentant le débit de données en fonction du SNR pour une série de pré-codeurs, lors d'une itération d'un mode de réalisation du procédé selon l'invention dans laquelle la commande de contrôle reçue du récepteur vaut (-1), et
- la figure 2b est un graphique représentant l'itération faisant suite à l'itération représentée sur la figure 2a, et dans laquelle la commande de contrôle reçue du récepteur vaut (0).

On considère un système de transmission de données comprenant un émetteur équipé de $N$ antenne(s) d'émission, où $N \geq 1$, et un récepteur équipé de $M$ antennes de réception, où $M \geq 2$.

Comme expliqué ci-dessus, initialement, le récepteur envoie des signaux pilotes à l'émetteur, ce qui permet à ce dernier, de manière classique, d'estimer le canal. Il est recommandé de répéter cette opération aussi souvent que nécessaire en fonction d'éventuelles variations du canal au cours du temps.

On désigne par $\hat{H} \in \mathbf{C}^{M \times N}$ la matrice obtenue par estimation de la matrice de canal $\hat{H} \in \mathbf{C}^{M \times N}$.

On va décrire pour commencer une méthode classique de construction d'un pré-codeur à Retournement Temporel Itératif, selon deux variantes de réalisation.

La première variante concerne un pré-codeur RTI dit « sans normalisation ».

Soit $A_k \in \mathbf{C}^{M \times N}$ le pré-codeur de Retournement Temporel Itératif, à l'itération $k$ (où $k$ est un entier positif ou nul) du retournement temporel itératif. Soit $A_{norm} = \dfrac{\hat{H}}{\alpha}$, où $\alpha$ est un facteur de normalisation tel que la matrice $(A_{norm}A_{norm}{}^h - I)$, où l'exposant « $h$ » désigne le transposé conjugué et « $I$ » la matrice identité, ait des valeurs propres positives ou nulles, mais strictement inférieures à 1 ; on peut prendre par exemple :

$$\alpha = \sqrt{trace\left(\hat{H}\hat{H}^h\right)}.$$

Pour $k = 0$, on prend : $A_0 = A_{norm}$.

Pour $k \in \mathbf{N}$, avec $k \geq 1$, on prend :

$$A_k = A_{k-1} + A_{k-1}(I - \hat{H}A_{k-1}).$$

Avantageusement, si cette méthode est appelée pour une valeur $k'$, et qu'elle a été appelée pour une valeur $k < k'$ et que $A_k$ a été conservé, alors $A_{k'}$ peut être déduit de $A_k$ rapidement, en un nombre réduit ($k' - k$) d'itérations.

L'inconvénient de cette variante est que les variations de $A_k$ avec $k$ sont lentes ; cela est dû au choix de $\alpha$.

La deuxième variante concerne un pré-codeur RTI dit « avec normalisation ». Elle diffère de la première variante seulement par le facteur de normalisation.

Pour $k = 0$, on prend : $A_0 = A_{norm}$.

Pour $k \in \mathbf{N}$, avec $k \geq 1$, on prend :

$$A_k = A_{k-1} + A_{k-1}\left(I - \frac{1}{\alpha_k}\widehat{H}A_{k-1}\right), \text{ où } \alpha_k = \sqrt{trace\left(\widehat{H}A_{k-1}\right)}.$$

L'avantage de cette variante par rapport à la variante précédente est que les variations de $A_k$ avec $k$ sont plus rapides.

On va décrire à présent un procédé de pré-codage selon un mode de réalisation de l'invention.

On choisit tout d'abord un pré-codeur RTI $A_k$ pour la matrice $\widehat{H} \in \mathbf{C}^{M \times N}$ relative au canal considéré, ledit pré-codeur pouvant par exemple être défini selon l'une des variantes décrites ci-dessus. On définit ensuite une série de pré-codeurs $L_n$, où $L_n$ est le pré-codeur $A_k$ tel que

$$k = N_0 + nq,$$

où n est un nombre entier positif ou nul, et $N_0$ et $q$ sont des entiers prédéterminés tels que $N_0 \geq 0$ et $q > 0$.

Le procédé étant itératif, on va décrire à présent les étapes composant une itération du procédé (à ne pas confondre avec une itération du retournement temporel dans la construction d'un pré-codeur RTI).

A l'initialisation du procédé, on initialise l'index $n$ à une valeur prédéterminée : $n = n_0$. Ensuite, pour chaque itération du procédé, on part de la valeur de $n$ obtenue lors de l'itération précédente du procédé.

Lors d'une étape E1, l'émetteur envoie au récepteur, séparément (la transmission pouvant être effectuée dans trois symboles temporels successifs par exemple), un triplet de signaux pilotes pré-codés avec les pré-codeurs $L_n$, $L_{n+1}$, et $L_{n+2}$.

Lors d'une étape E2, le récepteur estime, en fonction du triplet de signaux pilotes reçu, les débits totaux (i.e. sommés sur toutes les antennes de réception) atteignables courants $(T_n, T_{n+1}, T_{n+2})$ correspondant respectivement à $(L_n, L_{n+1}, L_{n+2})$. Puis, le récepteur détermine quel est le plus grand de ces trois débits, i.e. $\max(T_n, T_{n+1}, T_{n+2})$.

Le récepteur effectue ensuite les tests suivants et en déduit une commande de contrôle p, dont la valeur est déterminée comme suit :

- $p = +1$ si $T_n \leq T_n+2$, et $T_{n+1} \leq T_{n+2}$, i.e. $T_n+2 = \max(T_n, T_{n+1}, T_{n+2})$
- $p = -1$ si $T_n \geq T_n+1$, et $T_n \geq T_{n+2}$, i.e. $T_n = \max(T_n, T_{n+1}, T_{n+2})$, et
- $p = 0$ si $T_{n+1} \geq T_n$, et $T_{n+1} \geq T_{n+2}$, i.e. $T_n+1 = \max(T_n, T_n, T_{n+1}, T_{n+2})$.

Lors d'une étape E3, le récepteur envoie à l'émetteur un message de signalisation indiquant la valeur ainsi déterminée de la commande de contrôle $p$.

Lors d'une étape E4, sur réception du message contenant la commande de contrôle $p$, l'émetteur applique un « décalage de pré-codage » : l'émetteur met à jour la valeur de l'index $n$ en le remplaçant par la valeur de $(n + p)$.

On passe ensuite à l'itération suivante du procédé avec la valeur de $n$ mise à jour, et ainsi de suite.

On notera que, avantageusement, le récepteur n'a pas nécessairement besoin de connaître la valeur du rapport signal-sur-bruit-et-interférence SINR (initiales des mots anglais « *Signal over Interference plus Noise Ratio* ») des signaux pilotes pré-codés pour estimer les débits $(T_n, T_{n+1}, T_{n+2})$ associés. Même si le récepteur fait (selon une méthode classique) appel à la valeur des SINR pour estimer les débits, cette estimation peut sans dommages être réalisée de manière peu précise, car elle n'est utilisée que dans le but de déterminer quel est le plus grand des trois débits $T_n$, $T_{n+1}$ et $T_{n+2}$ ; pour être précis, selon une telle méthode, le débit total est estimé de la manière suivante (formule de Shannon) :

$$T = \sum_{m=1}^{M} \log(1 + \hat{y}_m) / \log(2),$$

où l'on note $\hat{y}_m$ le SINR pour le signal pilote pré-codé sur l'antenne de réception numéro $m$, où $m = 1, ... , M$ (on notera que l'interférence entre flux due à la transmission simultanée de plusieurs flux distincts est prise en compte dans cette estimation).

On va illustrer à présent les étapes itératives décrites ci-dessus au moyen de deux exemples, en références aux figures annexées. Ces figures montrent chacune la même série de courbes, chacune de ces courbes représentant, pour un pré-codage donné, le débit total associé aux signaux pilotes pré-codés, tel que mesuré par le récepteur, en fonction du SNR du canal pilote moyenné sur les antennes de réception.

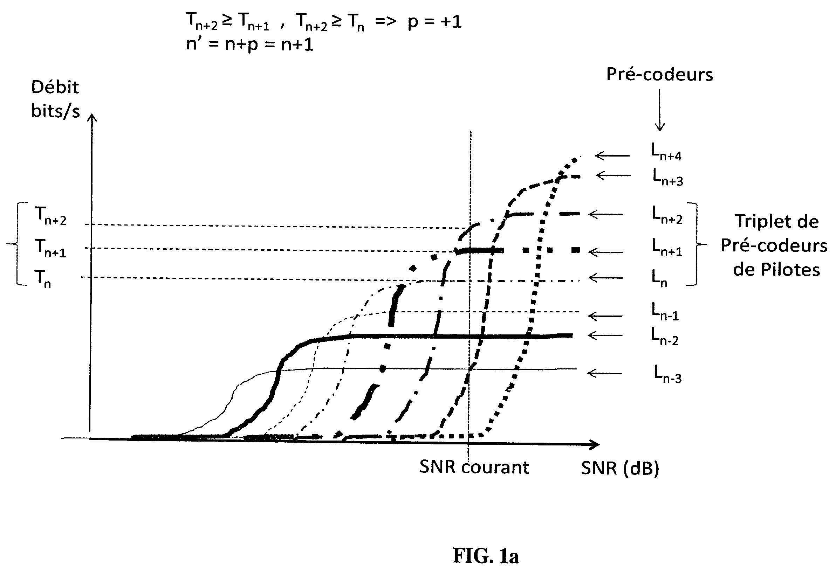

Selon un premier exemple, sur la **figure 1a,** compte tenu du SNR courant (dont, encore une fois, la valeur n'a pas nécessairement été déterminée), le récepteur constate que $T_n \leq T_{n+2}$ et $T_{n+1} \leq T_{n+2}$. Il envoie donc la commande de contrôle $p = +1$ à l'émetteur. Ce dernier incrémente la valeur de l'index $n$, qui devient donc $n' = n + 1$.

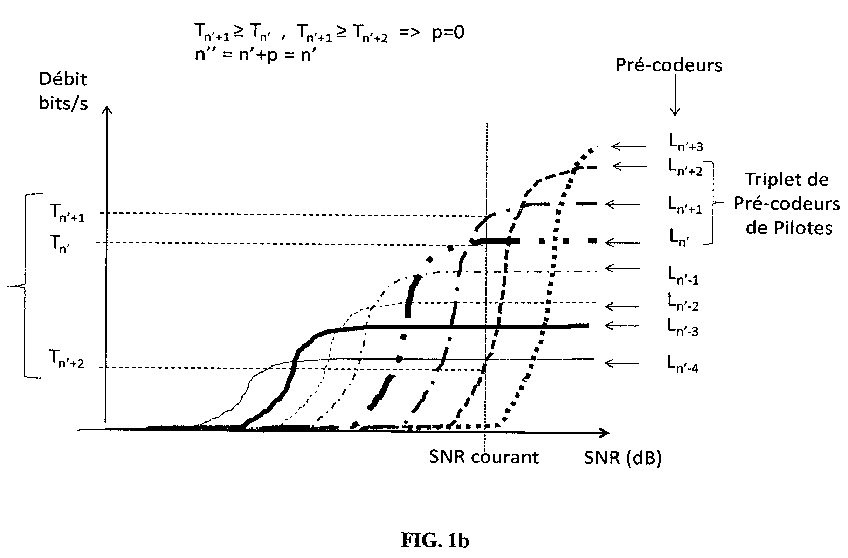

La **figure 1b** illustre l'itération suivant celle illustrée sur la figure 1a. Les courbes sont libellées en fonction de $n'$. Le récepteur reçoit un triplet de signaux pilotes pré-codés au moyen des pré-codeurs $L_{n'}$, $L_{n'+1}$, et $L_{n'+2}$. Le récepteur constate à présent que $T_{n'+1} \geq T_{n'}$ et $T_{n'+1} \geq T_{n'+2}$. Il envoie donc la commande de contrôle $p = 0$ à l'émetteur. Ce dernier incrémente la valeur de l'index, qui devient $n'' = n'$, c'est-à-dire qu'en l'occurrence cette valeur reste la même en sortant de cette itération qu'en y entrant.

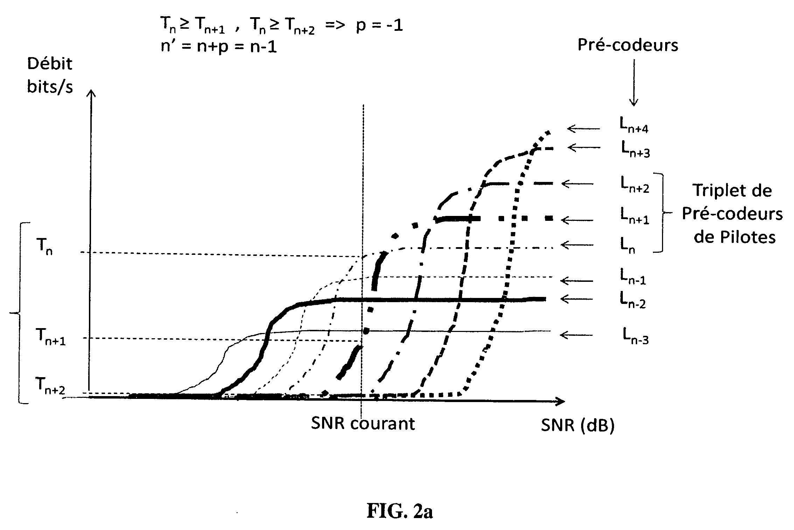

Selon un deuxième exemple, sur la **figure 2a**, compte tenu du SNR courant, le récepteur constate que $T_n \geq T_{n+1}$ et $T_n \geq T_{n+2}$. Il envoie donc la commande de contrôle $p = -1$ à l'émetteur. Ce dernier incrémente la valeur de l'index $n$, qui devient donc $n' = n - 1$.

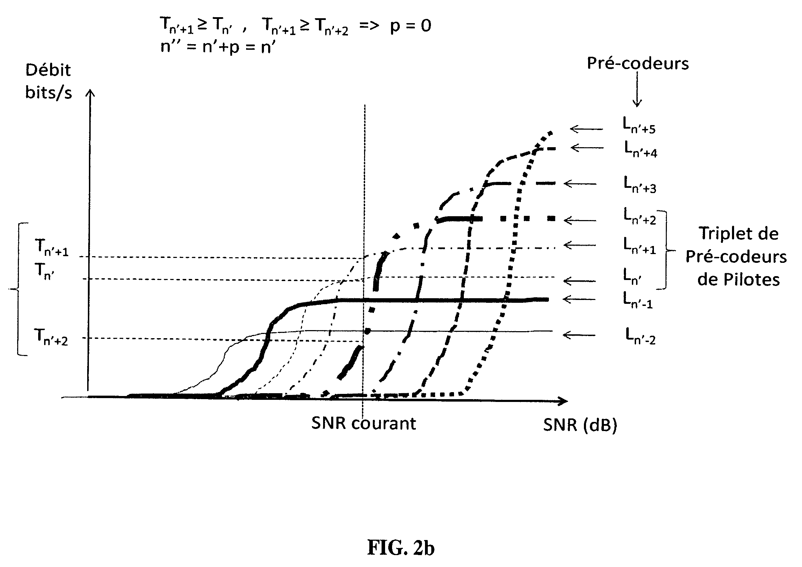

La **figure 2b** illustre l'itération suivant celle illustrée sur la figure 2a. Les courbes sont libellées en fonction de $n'$. Le récepteur reçoit un triplet de signaux pilotes pré-codés au moyen des pré-codeurs $L_{n'}$, $L_{n'+1}$, et $L_{n'+2}$. Le récepteur constate à présent que $T_{n'+1} \geq T_{n'}$ et $T_{n'+1} \geq T_{n'+2}$. Il envoie donc la commande de contrôle $p = 0$ à l'émetteur. Ce dernier incrémente la valeur de l'index, qui devient $n'' = n'$, c'est-à-dire qu'en l'occurrence cette valeur reste la même en sortant de cette itération qu'en y entrant.

Lorsque l'émetteur a des données à transmettre, il détermine un pré-codeur de données $G$, obtenu en appliquant au pré-codeur de pilotes $L_{n+1}$ courant un décalage $\delta$ d'itérations du retournement temporel itératif, et ce, afin de tenir compte du fait que les signaux pilotes et les signaux de données n'ont pas nécessairement la même puissance.

Un exemple de détermination du décalage $\delta$ est le suivant. On définit un différentiel de puissance $\theta$ dB comme suit :

$$\theta = 10 \, \log_{10}\left(\frac{P_{data}}{P_{pilotes}}\right),$$

où $P_{data}$ et $P_{pilotes}$ sont les puissances de transmission du canal de données et du canal pilote respectivement. Autrement dit :

$$\theta = \text{(SNR du canal pour les données)} - \text{(SNR du canal pour les pilotes)}.$$

On notera que la valeur du différentiel de puissance $\theta$ est facile à déterminer par l'émetteur, puisque c'est lui qui contrôle les puissances $P_{data}$ et $P_{pilotes}$.

Selon des caractéristiques particulières, on considère un accroissement de SNR (en dB) prédéterminé $f$ associé à l'application d'une unique itération du retournement temporel itératif. La valeur de cet accroissement $f$ peut être déterminée au moyen de simulations, préalablement à la mise en oeuvre du procédé selon l'invention. On peut alors commodément calculer ledit décalage $\delta$ conformément à :

$$\delta = \mathbf{E}[\theta/f],$$

où $\mathbf{E}$ désigne la partie entière.

Comme indiqué ci-dessus, la présente invention concerne également un système informatique mettant en oeuvre le procédé de contrôle de pré-codage décrit ci-dessus. Ce système informatique comporte de manière classique une unité centrale de traitement commandant par des signaux une mémoire, ainsi qu'une unité d'entrée et une unité de sortie.

De plus, ce système informatique peut être utilisé pour exécuter un programme d'ordinateur comportant des instructions pour la mise en oeuvre du procédé de pré-codage selon l'invention.

En effet, l'invention vise aussi un programme d'ordinateur téléchargeable depuis un réseau de communication comprenant des instructions pour l'exécution des étapes d'un procédé de pré-codage selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter en tant que code source, code objet, ou code intermédiaire entre code source et code objet, sous une forme partiellement compilée ou sous toute autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB (« *USB flash drive* » en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme d'ordinateur est incorporé, le circuit étant adapté pour exécuter ou pour être utilisé dans l'exécution du procédé selon l'invention.

## Revendications

1. Procédé de pré-codage pour un système de transmission de données en TDD comprenant un émetteur équipé de $N$ antenne(s) d'émission, où $N \geq 1$, et un récepteur équipé de $M$ antennes de réception, où $M \geq 2$, **caractérisé en ce que** l'on définit une série de pré-codeurs $L_n$, où n est un nombre entier positif ou nul, et $L_n$ est le pré-codeur obtenu en appliquant $(N_0 + nq)$, où $N_0$ et $q$ sont des entiers prédéterminés tels que $N_0 \geq 0$ et $q > 0$, itérations d'un pré-codeur à Retournement Temporel Itératif pour la matrice $\hat{H} \in \mathbf{C}^{M \times N}$, qui est une estimation de la matrice de canal $H \in \mathbf{C}^{M \times N}$, et **en ce que**, ledit procédé étant itératif, chaque itération du procédé comprend les étapes suivantes :

   - ledit émetteur prend en compte une valeur $n = n_0$ prédéterminée s'il s'agit de la première itération du procédé, ou sinon une valeur de $n$ obtenue lors de l'itération précédente du procédé,
   - l'émetteur envoie au récepteur (E1) un triplet de signaux pilotes pré-codés avec les pré-codeurs $L_n, L_{n+1}$, et $L_{n+2}$,
   - en fonction dudit triplet de signaux pilotes reçu, le récepteur estime (E2) le triplet $(T_n, T_{n+1}, T_{n+2})$ de débits totaux atteignables correspondant respectivement à $(L_n, L_{n+1}, L_{n+2})$, et en déduit une commande de contrôle $p$, dont la valeur est déterminée comme suit :

     • $p = +1$ si $T_{n+2} = \max (T_n, T_{n+1}, T_{n+2})$,
     • $p = -1$ si $T_n = \max (T_n, T_{n+1}, T_{n+2})$, et
     • $p = 0$ si $T_{n+1} = \max (T_n, T_{n+1}, T_{n+2})$,

   - le récepteur envoie (E3) un message de signalisation à l'émetteur indiquant ladite valeur de la commande de contrôle $p$, et
   - sur réception dudit message de signalisation, l'émetteur met à jour (E4) la valeur de $n$ en la remplaçant par la valeur de $(n + p)$.

2. Procédé de pré-codage selon la revendication 1, **caractérisé en ce que**, lorsque l'émetteur a des données à transmettre, il utilise pour cette transmission un pré-codeur de données $G$ obtenu en appliquant au pré-codeur de pilotes $L_{n+1}$ courant un décalage $\delta$ d'itérations du Retournement Temporel Itératif, ledit décalage $\delta$ étant fonction d'un différentiel de puissance $\theta$ dB défini comme suit :

$$\theta = 10 \log_{10} \left( \frac{P_{data}}{P_{pilotes}} \right),$$

où $P_{data}$ et $P_{pilotes}$ sont les puissances de transmission du canal de données et du canal pilote respectivement.

3. Procédé de pré-codage selon la revendication 2, **caractérisé en ce que** ledit décalage $\delta$ est calculé comme suit :

$$\delta = \mathbf{E}[\theta/f],$$

où $\mathbf{E}$ désigne la partie entière, et $f$ est un accroissement de SNR en dB prédéterminé associé à l'application d'une unique itération du Retournement Temporel Itératif.

**4.** Emetteur dans un système de transmission de données en TDD, ledit émetteur étant équipé de $N$ antenne(s) d'émission, où $N \geq 1$, **caractérisé en ce qu'**il comprend des moyens pour stocker ou engendrer une série de pré-codeurs $L_n$, où $n$ est un nombre entier positif ou nul, et $L_n$ est le pré-codeur obtenu en appliquant $(N_0 + nq)$, où $N_0$ et $q$ sont des entiers prédéterminés tels que $N_0 \geq 0$ et $q > 0$, itérations d'un pré-codeur à Retournement Temporel Itératif pour la matrice $\hat{H} \in \mathbf{C}^{M \times N}$, qui est une estimation de la matrice de canal $H \in \mathbf{C}^{M \times N}$, où $M \geq 2$ désigne le nombre d'antennes de réception d'un récepteur quelconque, et **en ce qu'**il comprend des moyens pour :

- enregistrer une valeur de $n$,
- envoyer audit récepteur un triplet de signaux pilotes pré-codés avec les pré-codeurs $L_n$, $L_{n+1}$, et $L_{n+2}$,
- recevoir de la part du récepteur un message de signalisation indiquant une valeur de commande de contrôle $p$, et
- sur réception dudit message de signalisation, mettre à jour la valeur de $n$ en la remplaçant par la valeur de $(n + p)$.

**5.** Emetteur selon la revendication 4, **caractérisé en ce qu'**il comprend en outre des moyens pour mettre en oeuvre un pré-codeur de données $G$ obtenu en appliquant au pré-codeur de pilotes $L_{n+1}$ courant un décalage $\delta$ d'itérations du Retournement Temporel Itératif, ledit décalage $\delta$ étant fonction d'un différentiel de puissance $\theta$ dB défini comme suit :

$$\theta = 10 \log_{10} \left( \frac{P_{data}}{P_{pilotes}} \right),$$

où $P_{data}$ et $P_{pilotes}$ sont les puissances de transmission du canal de données et du canal pilote respectivement.

**6.** Emetteur selon la revendication 5, **caractérisé en ce que** ledit décalage $\delta$ est calculé comme suit :

$$\delta = \mathbf{E}[\theta/f],$$

où $\mathbf{E}$ désigne la partie entière, et $f$ est un accroissement de rapport signal-sur-bruit en dB prédéterminé associé à l'application d'une unique itération du Retournement Temporel Itératif.

**7.** Circuit électronique, **caractérisé en ce qu'**il comprend un émetteur selon l'une quelconque des revendications 4 à 6.

**8.** Moyen de stockage de données inamovible, ou partiellement ou totalement amovible, comportant des instructions de code de programme informatique pour l'exécution des étapes d'un procédé de pré-codage selon l'une quelconque des revendications 1 à 3.

**9.** Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de pré-codage selon l'une quelconque des revendications 1 à 3, lorsqu'il est exécuté sur un ordinateur.

**Patentansprüche**

**1.** Vorcodierverfahren für ein TDD-Datenübertragungssystem, das einen mit N Sendeantennen ausgestatteten Emitter, wobei gilt N $\geq$ 1, und einen mit M Empfangsantennen ausgestatteten Empfänger enthält, wobei gilt M $\geq$ 2, **dadurch gekennzeichnet, dass** eine Reihe von Vorcodierern $L_n$ definiert wird, wobei n eine positive ganze Zahl oder Null ist, und $L_n$ der Vorcodierer ist, der durch Anwenden von $(N_0 + nq)$, wobei $N_0$ und q vorbestimmte ganze Zahlen sind, derart, dass gilt $N_0 \geq 0$ und q > 0, Iterationen eines Vorcodierers mit Iterativer Zeitumkehr für die Matrix $\hat{H} \in C^{MxN}$, die eine Schätzung der Kanalmatrix $H \in C^{MxN}$ ist, erhalten wird, und dass, da das Verfahren iterativ ist, jede Iteration des Verfahrens die folgenden Schritte enthält:

- der Emitter berücksichtigt einen vorbestimmten Wert n = $n_0$, wenn es sich um die erste Iteration des Verfahrens handelt, oder sonst einen Wert von n, der bei der vorhergehenden Iteration des Verfahrens erhalten wird,
- der Emitter sendet an den Empfänger (E1) ein Triplet von mit den Vorcodierern $L_n$, $L_{n+1}$ und $L_{n+2}$ vorcodierten Pilotsignalen,

- abhängig vom empfangenen Triplet von Pilotsignalen schätzt der Empfänger (E2) das Triplet $(T_n, T_{n+1}, T_{n+2})$ von erreichbaren Gesamtdurchsätzen entsprechend jeweils $(L_n, L_{n+1}, L_{n+2})$, und leitet daraus eine Kontrollsteuerung p ab, deren Wert folgendermaßen bestimmt wird:

- • p = +1, wenn gilt $T_{n+2}$ = max $(T_n, T_{n+1}, T_{n+2})$,
- • p = -1, wenn gilt $T_n$ = max $(T_n, T_{n+1}, T_{n+2})$, und
- • p = 0, wenn gilt $T_{n+1}$ = max $(T_n, T_{n+1}, T_{n+2})$,

- der Empfänger sendet (E3) eine Signalisierungsmitteilung an den Emitter, die den Wert der Kontrollsteuerung p angibt, und
- bei Empfang der Signalisierungsmitteilung aktualisiert der Emitter (E4) den Wert von n, indem er ihn durch den Wert von (n + p) ersetzt.

**2.** Vorcodierverfahren nach Anspruch 1, **dadurch gekennzeichnet, dass** der Emitter, wenn er Daten zu übertragen hat, für diese Übertragung einen Daten-Vorcodierer G verwendet, der erhalten wird, indem an den laufenden Pilot-signal-Vorcodierer $L_{n+1}$ eine Verzögerung $\delta$ von Iterationen der Iterativen Zeitumkehr angewendet wird, wobei die Verzögerung $\delta$ von einem Leistungsdifferential $\theta$ dB abhängt, das folgendermaßen definiert wird:

$$\theta \; = \; 10 \; \log_{10} \; \left(\frac{P_{data}}{P_{pilotes}}\right),$$

wobei $P_{data}$ und $P_{pilotes}$ die Übertragungsleistungen des Datenkanals bzw. des Pilotkanals sind.

**3.** Vorcodierverfahren nach Anspruch 2, **dadurch gekennzeichnet, dass** die Verzögerung $\delta$ folgendermaßen berechnet wird:

$$\delta \; = \; E[\theta/f],$$

wobei E den ganzzahligen Teil bezeichnet und f ein vorbestimmter Zuwachs von SNR in dB ist, der der Anwendung einer einzigen Iteration der Iterativen Zeitumkehr zugeordnet ist.

**4.** Emitter in einem TDD-Datenübertragungssystem, wobei der Emitter mit N Sendeantennen ausgerüstet ist, wobei gilt N $\geq$ 1, **dadurch gekennzeichnet, dass** er Einrichtungen zum Speichern oder Erzeugen eine Reihe von Vor-codierern $L_n$ enthält, wobei n eine positive ganze Zahl oder Null ist, und $L_n$ der Vorcodierer ist, der durch Anwenden von $(N_0 + nq)$, wobei $N_0$ und q vorbestimmte ganze Zahlen sind, derart, dass gilt $N_0 \geq 0$ und q > 0, Iterationen eines Vorcodierers mit Iterativer Zeitumkehr für die Matrix $\hat{H} \in C^{MxN}$, die eine Schätzung der Kanalmatrix $H \in C^{MxN}$ ist, wobei M $\geq$ 2 die Anzahl von Empfangsantennen eines beliebigen Empfängers bezeichnet, erhalten wird, und dass er Einrichtungen enthält, um:

- einen Wert von n aufzuzeichnen,
- an den Empfänger ein Triplet von mit den Vorcodierern $L_n$, $L_{n+1}$ und $L_{n+2}$ vorcodierten Pilotsignalen zu senden,
- vom Empfänger eine Signalisierungsmitteilung zu empfangen, die einen Kontrollsteuerwert p angibt, und
- bei Empfang der Signalisierungsmitteilung den Wert von n zu aktualisieren, indem er durch den Wert von (n + p) ersetzt wird.

**5.** Emitter nach Anspruch 4, **dadurch gekennzeichnet, dass** er außerdem Einrichtungen enthält, um einen Daten-Vorcodierer G einzusetzen, der durch Anwenden einer Verzögerung $\delta$ von Iterationen der Iterativen Zeitumkehr an den laufenden Pilotsignal-Vorcodierer $L_{n+1}$ erhalten wird, wobei die Verzögerung $\delta$ von einem Leistungsdifferential $\theta$ dB abhängt, das folgendermaßen definiert wird:

$$\theta \; = \; 10 \; \log_{10} \; \left(\frac{P_{data}}{P_{pilotes}}\right),$$

wobei $P_{data}$ und $P_{pilotes}$ die Übertragungsleistungen des Datenkanals bzw. des Pilotkanals sind.

**6.** Emitter nach Anspruch 5, **dadurch gekennzeichnet, dass** die Verzögerung $\delta$ folgendermaßen berechnet wird:

$$\delta = \mathbb{E}[\theta/f],$$

wobei E den ganzzahligen Teil bezeichnet und f ein vorbestimmter Zuwachs des Signal-Rausch-Verhältnisses in dB ist, der der Anwendung einer einzigen Iteration der Iterativen Zeitumkehr zugeordnet ist.

**7.** Elektronischer Schaltkreis, **dadurch gekennzeichnet, dass** er einen Emitter nach einem der Ansprüche 4 bis 6 enthält.

**8.** Nicht entfernbare oder teilweise oder ganz entfernbare Datenspeichereinrichtung, die EDV-Programmcodeanweisungen zur Ausführung der Schritte eines Vorcodierverfahrens nach einem der Ansprüche 1 bis 3 aufweist.

**9.** Computerprogramm, das von einem Kommunikationsnetz herunterladbar und/oder auf einem computerlesbaren Träger gespeichert und/oder von einem Mikroprozessor ausführbar ist, **dadurch gekennzeichnet, dass** es Anweisungen zur Ausführung der Schritte eines Vorcodierverfahrens nach einem der Ansprüche 1 bis 3 enthält, wenn es auf einem Computer ausgeführt wird.

**Claims**

**1.** Pre-coding method for a system for transmitting data in TDD mode comprising a transmitter equipped with $N$ transmission antenna(s), in which $N \geq 1$, and a receiver equipped with $M$ reception antennas, where $M \geq 2$, **characterized in that** there is defined a series of pre-coders $L_n$, where $n$ is a positive integer or zero, and $L_n$ is the pre-coder obtained by applying $(N_0 + nq)$, where $N_0$ and $q$ are predetermined integers such that $N_0 \geq 0$ and $q > 0$, iterations of an iterative time reversal pre-coder for the matrix $\hat{H} \in \mathbf{C}^{M \times N}$, which is an estimation of the channel matrix $\mathbf{H} \in \mathbf{C}^{M \times N}$, and **in that**, said method being iterative, each iteration of the method comprises the following steps:

- said transmitter takes into account a predetermined value $n = n_0$ if it is the first iteration of the method, or, if not, a value of $n$ obtained upon the preceding iteration of the method,
- the transmitter sends to the receiver (E1) a triplet of pilot signals pre-coded with the pre-coders $L_n$, $L_{n+1}$, and $L_{n+2}$,
- as a function of said triplet of pilot signals received, the receiver estimates (E2) the triplet $(T_n, T_{n+1}, T_{n+2})$ of achievable total bit rates corresponding respectively to $(L_n, L_{n+1}, L_{n+2})$ and deduces therefrom a control command $p$, the value of which is determined as follows:

 • $p = +1$ if $T_{n+2} = \max(T_n, T_{n+1}, T_{n+2})$,
 • $p = -1$ if $T_n = \max(T_n, T_{n+1}, T_{n+2})$, and
 • $p = 0$ if $T_{n+1} = \max(T_n, T_{n+1}, T_{n+2})$.

- the receiver sends (E3) a signalling message to the transmitter indicating said control command value $p$, and
- on reception of said signalling message, the transmitter updates (E4) the value of $n$ by replacing it with the value of $(n + p)$.

**2.** Pre-coding method according to Claim 1, **characterized in that**, when the transmitter has data to be transmitted, it uses, for this transmission, a data pre-coder $G$ obtained by applying to the current pilot pre-coder $L_{n+1}$ a shift $\delta$ of iterations of the iterative time reversal, said shift $\delta$ being a function of a power differential $\theta$ dB defined as follows:

$$\theta = 10 \log_{10}\left(\frac{P_{data}}{P_{pilots}}\right)$$

where $P_{data}$ and $P_{pilots}$ are the transmission powers of the data channel and of the pilot channel respectively.

**3.** Pre-coding method according to Claim 2, **characterized in that** said shift $\delta$ is calculated as follows:

$$\delta = \mathrm{E}[\theta/f]$$
,

where E denotes the integer part, and $f$ is a predetermined increase in SNR in dB associated with the application of a single iteration of the iterative time reversal.

4. Transmitter in a system for transmitting data in TDD mode, said transmitter being equipped with $N$ transmission antenna(s), where $N \geq 1$, **characterized in that** it comprises means for storing or generating a series of pre-coders $L_n$, where $n$ is a positive integer or zero, and $L_n$ is the pre-coder obtained by applying $(N_0 + nq)$, where $N_0$ and $q$ are predetermined integers such that $N_0 \geq 0$ and $q > 0$, iterations of an iterative time reversal pre-coder for the matrix $\hat{H} \in C^{M \times N}$, which is an estimation of the channel matrix $H \in C^{M \times N}$, where $M \geq 2$ denotes the number of reception antennas of any receiver, and **in that** it comprises means for:

    - storing a value of $n$,
    - sending to said receiver a triplet of pilot signals pre-coded with the pre-coders $L_n$, $L_{n+1}$, and $L_{n+2}$,
    - receiving from the receiver a signalling message indicating a control command value $p$, and
    - on reception of said signalling message, updating the value of $n$ by replacing it with the value of $(n + p)$.

5. Transmitter according to Claim 4, **characterized in that** it further comprises means for implementing a data pre-coder $G$ obtained by applying to the current pilot pre-coder $L_{n+1}$ a shift $\delta$ of iterations of the iterative time reversal, said shift $\delta$ being a function of a power differential $\theta$ dB defined as follows:

$$\theta = 10 \log_{10}\left(\frac{P_{data}}{P_{pilots}}\right)$$

where $P_{data}$ and $P_{pilots}$ are the transmission powers of the data channel and of the pilot channel respectively.

6. Transmitter according to Claim 5, **characterized in that** said shift $\delta$ is calculated as follows:

$$\delta = \mathrm{E}[\theta/f]$$
,

where E denotes the integer part, and $f$ is a predetermined increase in signal-to-noise ratio in dB associated with the application of a single iteration of the iterative time reversal.

7. Electronic circuit, **characterized in that** it comprises a transmitter according to any one of Claims 4 to 6.

8. Data storage means that is non-removable, or partially or totally removable, comprising computer program code instructions for the execution of the steps of a pre-coding method according to any one of Claims 1 to 3.

9. Computer program that can be downloaded from a communication network and/or stored on a medium that can be read by a computer and/or that can be executed by a microprocessor, **characterized in that** it comprises instructions for the execution of the steps of a pre-coding method according to any one of Claims 1 to 3, when it is run on a computer.

Pré-codeurs

Triplet de
Pré-codeurs
de Pilotes

$L_{n+4}$
$L_{n+3}$
$L_{n+2}$
$L_{n+1}$
$L_n$
$L_{n-1}$
$L_{n-2}$
$L_{n-3}$

SNR (dB)

SNR courant

$T_{n+2} \geq T_{n+1}$ , $T_{n+2} \geq T_n$ => p = +1
n' = n+p = n+1

Débit
bits/s

$T_{n+2}$
$T_{n+1}$
$T_n$

**FIG. 1a**

FIG. 1b

FIG. 2a

FIG. 2b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **W.J. HIGLEY ; P. ROUX ; W.A. KUPERMAN.** Relationship between time reversal and linear equalization in digital communications. *J. Acoust. Soc. Am.,* Juillet 2006, vol. 120 (1), 35-37

- **A.D. DABBAGH ; D.J. LOVE.** Multiple antenna MMSE-based downlink precoding with quantized feedback or channel mismatch. *IEEE Transactions on Communications,* Novembre 2008, vol. 56 (11), 1859-1868